# EUROPÄISCHE PATENTSCHRIFT

(11) **EP 0 609 694 B1**
(45) Veröffentlichungstag und Bekanntmachung des Hinweises auf die Patenterteilung: **21.07.1999**
(21) Anmeldenummer: 94100678.5
(22) Anmeldetag: 19.01.1994
(51) Int. Cl.: H04B 1/40, G01S 13/74, G08G 1/0967

(54) **Verfahren zum Aussenden und Empfangen digitaler Informationen sowie Sender und Empfänger zur Durchführung der Verfahren**
Transmitter-receiver and method for transmitting and receiving digital information
Emetteur-récepteur et procédé d'émission et de réception d'informations numériques

(30) Priorität: 04.02.1993 DE 4303210
(43) Veröffentlichungstag der Anmeldung: 10.08.1994
(73) Patentinhaber: ROBERT BOSCH GMBH, 70442 Stuttgart (DE)
(72) Erfinder: Rossius, Hans-Ulrich, Dipl.-Ing., D-31177 Harsum (DE); Bode, Friedrich-Wilhelm, Dipl.-Ing., D-31552 Apelern (DE); Vahle, Andreas, Dipl.-Ing., D-31141 Hildesheim (DE); Fischer, Hans-Jürgen, Dr., D-31141 Hildesheim (DE)

(56) Entgegenhaltungen:
- EP-A- 0 247 612
- EP-A- 0 270 274
- GB-A- 2 246 271

## Beschreibung

Die Erfindung betrifft ein Verfahren zum ständigen Aussenden digitaler Informationen in einem hochfrequenten Signal von einem vorzugsweise ortsfesten Sender auf sich vorübergehend im Empfangsbereich des Senders befindliche Empfänger. Die Erfindung betrifft ferner ein Verfahren zum Empfangen eines solchen ausgesandten Signals sowie einen Sender und einen Empfänger für die genannten Signale.

Es ist insbesondere in der Verkehrsleittechnik bekannt, an Fahrstrecken ortsfeste Sender/Empfänger (Baken) zu installieren, die mit geeigneten Einheiten (On-Board units) in einem Fahrzeug kommunizieren können. Durch diese Kommunikation werden Informationen, insbesondere Verkehrsinformationen, von der Bake auf das Fahrzeug übertragen. Die vom Fahrzeug nach Art eines Transponders zurückgesandten Signale werden von der Bake aufgenommen und verarbeitet, insbesondere zur Vervollständigung der Verkehrsinformation an einen zentralen Verkehrsleitrechner weitergeleitet.

Es ist vorgesehen, in einem solchen System die beispielsweise an der Windschutzscheibe des Fahrzeugs angebrachte Geräteeinheit mit einer Batterie elektrisch zu versorgen. Würde der für das gesamte Gerät notwendige Versorgungsstrom ständig fließen, hätte die Batterie eine nur kurze Lebensdauer. Es ist daher bekannt, die Stromversorgung für das Gesamtgerät erst wirksam zu schalten, wenn ein Signal des Senders, also im Spezialfall der Bake, empfangen wird. Hierzu wird nach einem bekannten Vorschlag der bekannte Datentakt der Bake ausgewertet. Ein Detektor, der Signale im GHz-Bereich detektieren kann, hat jedoch bereits selbst eine relativ hohe Leistungsaufnahme. Eine ausreichende Reduzierung der Leistungsaufnahme im nichtaktivierten Bereich ist daher mit dem bekannten Verfahren nicht möglich.

Aus der EP 0 247 612 A2 ist ein Gerät zur Übertragung von Mikrowellen bekannt, das nach dem Transponderverfahren arbeitet. Eine Abfragestation sendet in einer Modulationsperiode Mikrowellensignale zu einem Empfänger, der zum Empfang dieser Mikrowellensignale ausgebildet ist. Der Empfänger moduliert die empfangenen Mikrowellensignale mit gespeicherten Daten und sendet diese in einer Nichtmodulationsperiode an den Sender zurück. Eines der empfangenen Hochfrequenzsignale, das periodisch gesendet wurde, wird dabei als Startsignal für die Elektronik verwendet.

Aus der EP 2 246 271 A ist ein mobiles Kommunikationssystem bekannt, das für einen Datenaustausch zwischen einer Feststation und einem Fahrzeuggerät ausgebildet ist. Dieses System arbeitet mit Mikrowellen, wobei ein niederfrequentes Aktivierungssignal in ein hochfrequentes Signal durch Amplitudenmodulation eingebracht wird.

Aus der EP 270 274 A2 ist ein Transpondersystem bekannt, das ebenfalls zur Überwachung von Personen oder Waren als induktiver TAG ausgebildet ist. Als Start-Code wird eine spezielle Bit-Folge gesendet, die von dem TAG ausgewertet wird und zur Aktivierung der restlichen Schaltung führt.

Ausgehend von dieser Problemstellung ist ein Verfahren zum ständigen Aussenden digitaler Informationen der eingangs erwähnten Art dadurch gekennzeichnet, daß das hochfrequente Signal zur Bildung eines Aktivierungssignals mit einem niederfrequenten Signalanteil versehen wird.

Mit dem erfindungsgemäßen Verfahren wird das Ziel erreicht, einerseits ständig die digitalen Informationen auszusenden, andererseits ein Aktivierungssignal (Aufwecksignal) für den Empfänger bereitzustellen, das relativ niederfrequent (beispielsweise im kHz-Bereich) ist und somit einen Detektor im Empfangsgerät ermöglicht, der eine optimal geringe Leistungsaufnahme hat. Die optimal geringe Leistungsaufnahme ist gegeben, wenn die Frequenz des Aktivierungssignals bei einigen kHz liegt.

In einer ersten Ausführungsform kann daher die Aussendung der digitalen Information durch ein kurzes Pausenintervall unterbrochen werden, in dem einige Wellenzüge des niederfrequenten Signalanteils ausgesandt werden. Die Länge des Pausenintervalls ergibt sich aus der für eine sichere Erkennung durch den Empfänger notwendigen Anzahl der Wellenzüge des niederfrequenten Signals. Die Wiederholungsrate für das Pausenintervall richtet sich nach der geforderten Aufweckzeit für das Empfangsgerät, da das Aktivieren des Empfangsgeräts nur während des Pausenintervalls möglich ist.

Eine weitere Möglichkeit, den niederfrequenten Anteil im Signal unterzubringen, besteht darin, die digitalen Daten mit einer Amplitudenumtastung während einer ersten Teilperiode zu übertragen und daran während einer zweiten Teilperiode Signale mit einer konstanten (vollen) Amplitude auszusenden. Durch die Aussendung von digitalen Informationen, die sowohl eine Vielzahl von logisch "1" als auch eine Vielzahl von logisch "0" enthalten, wobei beispielsweise logisch "1" der vollen Amplitude und logisch "0" der Amplitude Null entspricht, ergibt sich bei einer Gleichrichtung des Signals ein Amplitudenmittelwert von etwa der halben Maximalamplitude, die für einen der logischen Werte (beispielsweise logisch "1") verwendet wird. In dem zweiten Teilintervall steigt dann die resultierende Amplitude auf den Maximalwert an. Die aus den Teilintervallen resultierende Gesamtperiode kann so gewählt werden, daß sie dem gewünschten niederfrequenten Signalanteil entspricht, so daß im Empfänger eine einfache Amplitudendemodulation vorgenommen werden kann, ohne daß hierdurch die Auflösung für die übertragenen digitalen Daten verschlechtert wird.

Zu dem beschriebenen Verfahren zum ständigen Aussenden von digitalen Informationen in einem hochfrequenten Signal korrespondiert somit ein Verfahren zum Empfangen eines derartigen Signals, bei dem in einer Sparschaltung des Empfängers nur das Vorhandensein des niederfrequenten Signalanteils überprüft wird und eine Stromversorgung für das gesamte Gerät erst wirksam geschaltet wird, wenn der niederfrequente Signalanteil empfangen und festgestellt worden ist.

Zur Lösung der oben erwähnten Problemstellung dient im Rahmen der vorliegenden Erfindung ein Sender zum ständigen Aussenden digitaler Informationen in einem hochfrequenten Signal auf sich vorübergehend im Empfangsbereich des Senders befindliche Empfänger, der eine Einrichtung zum Versehen des hochfrequenten Signals mit einem als Aktivierungssignal dienenden niederfrequenten Signalanteil aufweist.

Im Rahmen der vorliegenden Erfindung ist ein Empfänger gekennzeichnet durch eine Stromversorgung für die gesamte Schaltungsanordnung des Empfängers, die über eine StromversorgungsSteuerung einschaltbar ist, und durch eine Erkennungsschaltung für ein niederfrequentes Aktivierungssignal, die die Stromversorgungssteuerung mit einem Einschaltsignal versorgt.

Weitere Vorteile der Erfindung sowie vorteilhafte Ausführungsformen ergeben sich aus der nachfolgenden Beschreibung von anhand der Zeichnung erläuterten Ausführungsbeispielen. Es zeigen:
- Figur 1 -: ein Blockschaltbild für einen Empfänger mit einer Aufweckschaltung
- Figur 2 -: Signalverlauf eines hochfrequenten ausgesandten Signals
- Figur 3 -: schematische Signalverläufe zur Einbringung eines niederfrequenten Signalanteils in einer anderen Ausführungsform
- Figur 4 -: schematische Signalverläufe für die Übersendung eines niederfrequenten Signalanteils in einem kurzen Pausenintervall

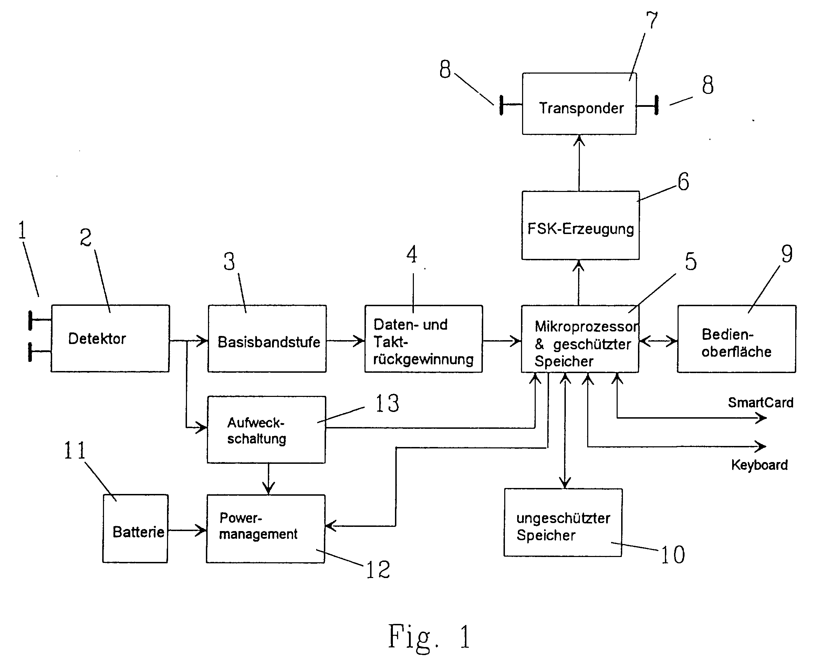

Das in Figur 1 in einem Blockschaltbild dargestellte Empfangsgerät weist Antennen 1 in Form von Planarantennen auf, deren empfangene Signale von einem Detektor 2 auf eine Basisbandstufe 3 gelangen, die ein Filter für die Datensignale aufweist. Das so störbefreite Signal gelangt in eine Daten- und Taktrückgewinnungsstufe 4, deren Ausgangssignal von einem Mikroprozessor 5 mit einem geschützten Speicher verarbeitet wird. Der Mikroprozessor 5 veranlaßt ein Ausgangssignal, das in einer Frequenzumtastungsstufe 6 (FSK-Stufe; FSK = frequency shift keying) aufbereitet und einem Transponder 7 zur Aussendung über Sendeantennen 8 zugeleitet wird.

Der Mikroprozessor kann in üblicher Weise eine geeignete Bedienoberfläche 9, beispielsweise in Form eines Displays, aufweisen.

Zur Erweiterung der Funktion des Empfangsgeräts können dem Mikroprozessor 5 zusätzliche Daten aus einer Smartcard, einem Keyboard oder einem externen (ungeschützten) Speicher 10 zugeführt werden.

Die verschiedenen Stufen des Empfangsgeräts werden durch eine Batterie 11 versorgt. An diese ist erfindungsgemäß eine Stromversorgungssteuerung 12 angeschlossen, die das Empfangsgerät mit seinen Stufen - mit Ausnahme des Detektors 2 - in einen inaktiven Zustand schaltet. Das Einschalten in den aktiven Zustand geschieht mit Hilfe einer Aufweckschaltung 13, die auch im inaktiven Zustand des Empfangsgeräts von der Batterie 11 über die Stromversorgungssteuerung 12 versorgt wird.

Die Aufweckschaltung 13 erkennt einen niederfrequenten Signalanteil in dem von den Antennen 1 empfangenen und vom Detektor 2 verarbeiteten Signal. Solange ein niederfrequenter Signalanteil durch die Aufweckschaltung 13 nicht erkannt wird, verbleibt das Empfangsgerät im inaktiven Zustand. Erkennt die Aufweckschaltung 13 hingegen den niederfrequenten Signalanteil, wird ein Einschaltsignal auf die Stromversorgungssteuerung 12 geleitet, das daraufhin alle Stufen des Empfangsgeräts mit der erforderlichen Versorgungsspannung beliefert.

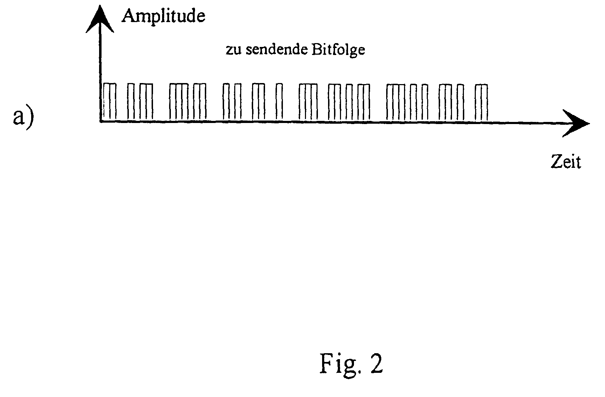

Figur 2 zeigt ein einfaches Beispiel für ein im Empfangsgerät zu verarbeitendes hochfrequentes Signal des Senders. Zeile a) verdeutlicht eine zu sendende Bitfolge, wobei zwei Signalzustände vorgesehen sind, nämlich volle Amplitude für logisch "1" und Null-Amplitude für logisch "0".

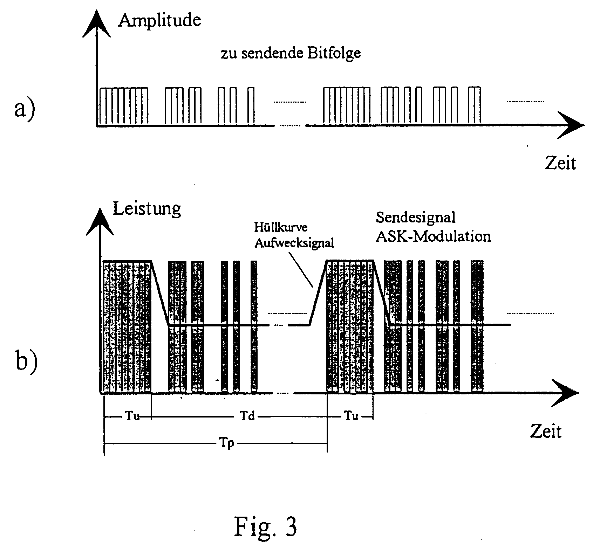

Ein hochfrequentes Signal mit einem niederfrequenten Signalanteil entsteht dadurch, daß in einer ersten Teilperiode Td Signale von dem Sender zum Empfänger mit den digitalen Informationen ausgesandt werden und daß in einer zweiten Teilperiode Tu, die für die Rücksendung von Signalen vom Empfänger zum Sender zur Verfügung steht, digitale Signale mit einer konstanten maximalen Amplitude übersandt werden. Werden hierbei die digitalen Signale als 2-Pegel-Signale ausgesandt, entsteht durch das Vorhandensein von Signalen mit einem geringen Amplitudenpegel (bzw. Amplitudenpegel 0) eine resultierende durchschnittliche Amplitude, die während der ersten Teilperiode Td geringer ist als in der zweiten Teilperiode Tu. Obwohl also die einzelnen digitalen Bits mit jeweils maximaler Amplitude bzw. Amplitude 0 - also mit einem konstanten Signal-Rausch-Verhältnis - übersandt werden, entsteht bei einer Amplitudendetektion unter Verwendung eines Tiefpasses im Empfänger eine Integrationskurve (Hüllkurve), die in Figur 3 b) eingezeichnet ist und die Periode Td + Tu aufweist. Diese Periode entspricht vorzugsweise der Frequenz von einigen kHz, die für ein Aktivierungssignal unter den gegenläufigen Anforderungen der geringen Leistungsaufnahme und der möglichst kurzen Aufweckzeit jedenfalls für Verkehrsleitsysteme optimal ist.

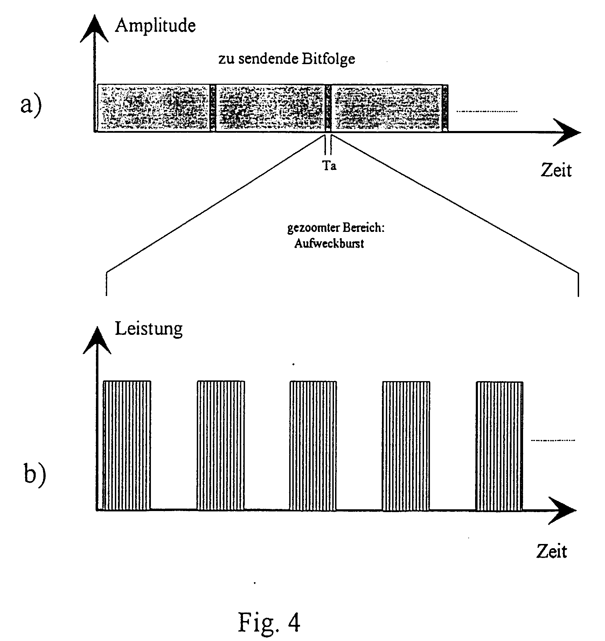

Figur 4 verdeutlicht in Zeile a), daß die hochfrequenten, digitale Informationen enthaltenen Signale kontinuierlich ausgesandt werden, jedoch durch Pausenintervalle Ta unterbrochen werden. In den Pausenintervallen Ta wird ein niederfrequentes Burstsignal ausgesandt, das in Zeile b) dargestellt ist. Bei dieser Ausführungsform hängt die Aufweckzeit im wesentlichen von der Wiederholrate der Pausenintervalle Ta bzw. der Aussendung des Aufweckbursts ab. Es ist ohne weiteres ersichtlich, daß die Pausenintervalle Ta nicht streng regelmäßig erscheinen müssen, wenn sie nur für die Zwecke der maximalen Aufweckzeit häufig genug auftreten. Auch bei der Verwendung der Aufweckburstsignale wird keine Beeinträchtigung des Signal-Rausch-Verhältnisses der eigentlichen digitalen Informationen vorgenommen.

## Patentansprüche

1. Verfahren zum Aussenden digitaler Informationen in einem hochfrequenten Signal von einem vorzugsweise ortsfesten Sender an einen sich vorübergehend im Empfangsbereich des Senders befindlichen Empfänger, wobei das hochfrequente Signal zur Bildung eines Aktivierungssignals für das Einschalten einer Stromversorgungssteuerung mit einem niederfrequenten Signaleanteil versehen wird, dadurch gekennzeichnet, daß die digitalen Informationen als binäre Bitfolge mit logischen "1"- und "0"-Werten mit dem hochfrequenten Signal derart gebildet werden, daß das vom Sender ausgesandte Signal abwechselnd während einer ersten Teilperiode (Td) die digitalen Informationen in amplitudenumgetasteter Form und während einer zweiten Teilperiode (Tu) Signale mit konstanter Amplitude enthält, wobei die Teilperioden (Td, Tu) eine zu dem niederfrequenten Signalanteil korrespondierende Gesamtperiode (Td + Tu) ergeben.

2. Verfahren nach Anspruch 1, dadurch gekennzeichnet, daß die digitalen Informationen in dem hochfrequenten Signal im GHz-Bereich übertragen werden und daß das niederfrequente Aktivierungssignal im kHz-Bereich liegt.

3. Verfahren nach Anspruch 1 oder 2, dadurch gekennzeichet, daß das hochfrequente Signal mit dem niederfrequenten Signalanteil amplitudenmoduliert wird.

4. Verfahren zum Empfangen eines nach einem der Ansprüche 1 bis 3 ausgesandten Signals, dadurch gekennzeichnet, daß in einer Sparschaltung des Empfängers zum Schalten der Stromversorgung für das gesamte Gerät das Vorhandensein des niederfrequenten Signalanteils überprüft wird, wobei aus dem empfangenen hochfrequenten Signal eine erste Teilperiode (Td) detektiert wird, in der digitale Informationen eine resultierende durchschnittlich geringere Amplitude bilden als in einer zweiten Teilperiode (Tu), und daß aus den beiden Teilperioden (Td, Tu) das niederfrequente Signal gebildet wird.

5. Sender zum Aussenden digitaler Informationen in einem hochfrequenten Signal auf einen sich vorübergehend im Empfangsbereich des Senders befindliche Empfänger, gekennzeichnet durch eine Einrichtung zum Versehen des hochfrequenten Signals mit einem als Aktivierungssignal dienenden niederfrequenten Signalanteil, wobei der Sender derart ausgebildet ist, daß das vom Sender ausgesandte Signal abwechselnd während einer ersten Teilperiode (Td) die digitalen Informationen in amplitudenumgetasteter Form und während einer zweiten Teilperiode (Tu) Signale mit konstanter Amplitude enthält, wobei die Teilperioden (Td, Tu) eine zu dem niederfrequenten Signalanteil korrenspondierende Gesamtperiode (Td + Tu) ergeben.

6. Empfänger zum Empfangen eines nach dem Verfahren gemäß Anspruch 1 ausgesandten Signals, mit Mitteln zum Empfang digitaler Informationen in einem hochfrequenten Signal von einem vorzugsweise ortsfesten Sender, in dessen Empfangsbereich sich der Empfänger vorübergehend befindet, mit Mitteln zum Aussenden eines Signals als Antwort auf das empfangene Signal, mit einer Stromversorgung (11) für die gesamte Schaltungsanordnung des Empfängers, die über eine Stromversorgungssteuerung (12) einschaltbar ist, und mit einer Erkennungsschaltung (13) für ein niederfrequentes Aktivierungssignal, die die Stromversorgungssteuerung (12) mit einem Einschaltsignal versorgt, dadurch gekennzeichnet, daß der Empfänger ausgebildet ist, unter Verwendung eines Tiefpasses eine Amplitudendetektion durchzuführen, wobei aus dem empfangenen hochfrequenten Signal eine erste Teilperiode (Td) detektiert wird, in der digitale Informationen eine resultierende durchschnittlich geringere Amplitude bilden als in einer zweiten Teilperiode (Tu), und daß aus den beiden Teilperioden (Td, Tu) das niederfrequente Signal gebildet wird.

7. Empfänger nach Anspruch 6, dadurch gekennzeichnet, daß die Erkennungsschaltung (13) eine Filterschaltung aufweist, deren obere Grenzfrequenz oberhalb der Frequenz des niederfrequenten Signalanteils und unterhalb der in dem hochfrequenten Signal auftretenden niedrigsten Frequenz liegt.

## Claims

1. Method for the transmission of digital information in a high-frequency signal from a preferably stationary transmitter to a receiver which is temporarily located in the service area of the transmitter, the high-frequency signal being provided with a low-frequency signal component for the purpose of forming an activation signal for switching on a power supply controller, characterized in that the digital information is formed as a binary bit sequence with logic "1" and "0" values with the high-frequency signal in such a way that the signal transmitted by the transmitter alternately contains the digital information in amplitude shift-keyed form during a first subperiod (Td) and signals having a constant amplitude during a second subperiod (Tu), the subperiods (Td, Tu) producing a total period (Td + Tu) which corresponds to the low-frequency signal component.

2. Method according to Claim 1, characterized in that the digital information is transmitted in the high-frequency signal in the GHz range, and in that the low-frequency activation signal lies in the kHz range.

3. Method according to Claim 1 or 2, characterized in that the high-frequency signal is amplitude-modulated with the low-frequency signal component.

4. Method for the reception of a signal which is transmitted according to one of Claims 1 to 3, characterized in that the presence of the low-frequency signal component is checked in a power-saving circuit of the receiver for switching the power supply for the entire apparatus, a first subperiod (Td) being detected from the received, high-frequency signal, in which first subperiod digital information forms a resulting amplitude which is smaller on average than in a second subperiod (Tu) and in that the low-frequency signal is formed from the two subperiods (Td, Tu).

5. Transmitter for the transmission of digital information in a high-frequency signal to a receiver which is temporarily located in the service area of the transmitter, characterized by a device for providing the high-frequency signal with a low-frequency signal component serving as activation signal, the transmitter being designed in such a way that the signal transmitted by the transmitter alternately contains the digital information in amplitude shift-keyed form during a first subperiod (Td) and signals having a constant amplitude during a second subperiod (Tu), the subperiods (Td, Tu) producing a total period (Td + Tu) which corresponds to the low-frequency signal component.

6. Receiver for the reception of a signal which is transmitted by the method according to Claim 1, having means for receiving digital information in a high-frequency signal from a preferably stationary transmitter in whose service area the receiver is temporarily located, having means for transmitting a signal as response to the received signal, having a power supply (11) for the entire circuit arrangement of the receiver which can be switched on by means of a power supply controller (12), and having an identification circuit (13) for a low-frequency activation signal which supplies the power supply controller (12) with a switch-on signal, characterized in that the receiver is designed to carry out amplitude detection using a low-pass filter, a first subperiod (Td) being detected from the received, high-frequency signal, in which first subperiod digital information forms a resulting amplitude which is smaller on average than in a second subperiod (Tu) and in that the low-frequency signal is formed from the two subperiods (Td, Tu).

7. Receiver according to Claim 6, characterized in that the identification circuit (13) has a filter circuit whose upper cut-off frequency lies above the frequency of the low-frequency signal component and below the lowest frequency that occurs in the high-frequency signal.

## Revendications

1. Procédé d'émission d'informations numériques dans un signal à haute fréquence par un émetteur de préférence fixe, vers un récepteur qui se trouve transitoirement dans la zone de réception de l'émetteur,
le signal haute fréquence ayant une composante de signal basse fréquence pour former un signal d'activation pour le branchement d'une commande d'alimentation électrique,
caractérisé en ce que
les informations numériques sont formées comme des suites de bits binaires d'états logiques « 1 » et « 0 » avec le signal haute fréquence,
- le signal émis par l'émetteur contient en alternance, pendant une première partie de période (Td), des informations numériques sous une forme résultant d'une détection d'amplitude et, pendant une seconde partie de période (Tu), des signaux d'amplitude constante,
- les parties de période (Td, Tu) donnant une période totale (Td + Tu) correspondant à la composante basse fréquence du signal.

2. Procédé selon la revendication 1,
caractérisé en ce que
les informations numériques sont transmises dans la plage des GHz du signal haute fréquence, et le signal d'activation basse fréquence se situe dans la plage des kHz.

3. Procédé selon la revendication 1 ou 2,
caractérisé en ce que
le signal haute fréquence est modulé en amplitude par la partie de signal basse fréquence.

4. Procédé de réception d'un signal émis selon l'une quelconque des revendications 1 à 3,
caractérisé en ce que
dans un circuit d'économie du récepteur, pour commuter l'alimentation électrique de l'ensemble de l'appareil, on contrôle la présence de la composante basse fréquence du signal,
- et à partir du signal haute fréquence reçu, on détecte une première partie de période (Td) dans laquelle se trouve l'information numérique relative à une amplitude faible, de moyenne résultante plus petite que dans la seconde partie de période (Tu), et en ce qu'à partir des deux parties de période (Td et Tu), on forme le signal basse fréquence.

5. Emetteur pour émettre des informations numériques dans un signal à haute fréquence vers un récepteur qui se trouve provisoirement dans la plage de fréquence de l'émetteur,
caractérisé par
une installation pour munir le signal haute fréquence d'une composante de signal basse fréquence servant à un signal d'activation,
- l'émetteur étant réalisé de façon que le signal émis par l'émetteur contienne alternativement, pendant la première partie de période (Td), les informations numériques sous forme de détection d'amplitude et, pendant une seconde partie de période (Tu), les signaux d'amplitude constante, les périodes partielles (Td, Tu) donnant une période totale (Td + Tu) correspondant à la composante du signal basse fréquence.

6. Récepteur pour recevoir un signal émis selon le procédé de la revendication 1, comprenant des moyens pour recevoir des informations numériques contenues dans un signal à haute fréquence provenant d'un émetteur de préférence fixe, le récepteur se trouvant provisoirement dans la zone d'émission de cet émetteur, des moyens pour émettre un signal comme réponse au signal reçu, et une alimentation électrique (11) pour l'ensemble du circuit du récepteur, qui se branche par la commande d'alimentation électrique (12) et assure l'alimentation avec le circuit de reconnaissance (13), pour un signal d'activation basse fréquence, de toute la commande d'alimentation (12) avec un seul signal de branchement,
caractérisé en ce qu'
on effectue une détection d'amplitude et, à partir du signal haute fréquence reçu, on détecte une première partie de période (Td) dans laquelle les informations numériques forment une amplitude résultante, moyennement plus faible que dans la seconde partie de période (Tu) et en ce qu'à partir des deux parties de période (Td, Tu), on forme le signal de basse amplitude.

7. Récepteur selon la revendication 6,
caractérisé en ce que
le circuit de reconnaissance (13) comporte un filtre dont la fréquence de filtre supérieure se trouve au-dessus de la fréquence de la partie de fréquence basse du signal et en dessous de la fréquence la plus basse produite dans le signal haute fréquence.
